# NEUE EUROPÄISCHE PATENTSCHRIFT

(11) **EP 0 492 378 B2**
(45) Veröffentlichungstag und Bekanntmachung des Hinweises auf die Entscheidung über den Einspruch: **25.10.2000**
(45) Hinweis auf die Patenterteilung: 27.09.1995
(21) Anmeldenummer: 91121654.7
(22) Anmeldetag: 17.12.1991
(51) Int. Cl.: C08F 6/10, C08L 57/00, C08K 5/14

(54) **Wässrige Kunststoffdispersionen mit vermindertem Formaldehydgehalt**
Aqueous polymerdispersions with reduced amount of formaldehyde
Dispersions polymériques aqueuses ayant une teneur en formaldéhyde réduite

(30) Priorität: 20.12.1990 DE 4040959
(43) Veröffentlichungstag der Anmeldung: 01.07.1992
(73) Patentinhaber: WACKER-CHEMIE GMBH, D-81737 München (DE)
(72) Erfinder: Brink, Gerhard, Dr., W-8263 Burghausen (DE); Wierer, Konrad Alfons, Dr., W-8261 Mehring (DE)

(56) Entgegenhaltungen:
- EP-B- 0 019 169
- DE-A- 2 354 680
- DE-A- 2 354 681
- DE-A- 3 902 555
- DATABASE WPI Section Ch, Week 7619, Derwent Publications Ltd., London, GB; Class A, AN 76-35076X
- Chemical Abstracts, vol, 96, 1982, 96:182184a & CS-A-192269
- Derwent Abstract no. 20141W/12 & JP-A-49-047073
- Derwent Abstract no. 78085V/45 & JP-A-47-066078

## Beschreibung

Die Erfindung betrifft wäßrige Kunststoffdispersionen mit vermindertem Formaldehyd-Gehalt, welche zur Verminderung des Gehalts an freiem Formaldehyd eine oder mehrere Peroxy-Verbindungen aus der Gruppe der Peroxide, Perborate, Percarbonate, Persulfate und Perphosphate enthalten.

Zur Bindung von Vliesstoffen, die vorwiegend im Medizin- oder Hygiene-Bereich Verwendung finden, werden, gegebenenfalls selbstvernetzende, wäßrige Dispersionen auf Kunstharzbasis eingesetzt. Das Basispolymerisat besteht dabei üblicherweise aus Homo- oder Copolymeren von Acrylsäureestern oder Methacrylsäureestern, Vinylacetat-Homopolymeren oder Vinylacetat-Ethylen-Copolymeren sowie Polymerisaten auf der Basis von Styrol-Butadien oder Vinylchlorid, gegebenenfalls mit einem Gehalt an selbstvernetzenden Comonomeren. Die beim Trocknungsvorgang von selbstvernetzenden Polymerisaten ablaufende Vernetzung bewirkt eine Erhöhung der Naß- und Trockenfestigkeit der Vliese bei mechanischer Belastung und verbessert die Reinigungsbeständigkeit der Vliese gegenüber Wasser und Lösungsmitteln.

Bei den in der Praxis eingesetzten Vernetzern handelt es sich vorwiegend um N-Methylolgruppenhaltige Monomere, wie N-Methylolderivate ungesättigter organischer Säureamide (N-Methylol-acrylamid) oder deren Ether (N-(isobutoxymethyl)acrylamid). N-Methylolverbindungen spalten im wäßrigen Milieu Formaldehyd ab. Vor allem wird bei Verwendung dieser Verbindungen als Vernetzer im wäßrigen Milieu bei der Trocknung, bedingt durch die Kondensationsreaktion, freier Formaldehyd abgespalten. Der so gebildete freie Formaldehyd ist auch nach intensiver Trocknung noch im Vliesstoff enthalten.

Eine weitere Quelle für freien Formaldehyd in wäßrigen Kunstharzdispersionen sind die bei der Polymerisation eingesetzten Redoxkatalysatoren, beispielsweise Brüggolit oder Rongalit (Alkali-Formaldehydsulfoxylate), die im wäßrigen Milieu ebenfalls Formaldehyd abgeben.

Aufgrund der seit längerem diskutierten toxikologischen Bedenken gegenüber Formaldehyd und der Auflage, daß für Vliesstoffe im Medizin- und Hygienebereich nur begrenzte Formaldehydkonzentrationen im Fertigvlies zugelassen werden, besteht die Notwendigkeit, als Vlies-Bindemittel Kunststoffdispersionen mit reduziertem Formaldehydgehalt zur Verfügung zu stellen.

In der DE-A1 33 28 456 (EP-A1 143 175) werden formaldehydfreie, vernetzbare Polymersysteme mit Vernetzerkomponenten auf Basis von N-Methylolamid- und/oder N-Methyloletheramidgruppen beansprucht. Die Formaldehydreduktion wird hier durch Zusatz eines Formaldehydakzeptors auf Basis cyclischer Harnstoffe wie beispielsweise Ethylenharnstoff, der entstehenden freien Formaldehyd bindet, erreicht. Der Nachteil dieser Vorgehensweise besteht darin, daß durch den Zusatz wasserlöslicher organischer Substanzen speziell die Naßfestigkeitswerte der gebundenen Vliesstoffe herabgesetzt werden und nach wie vor Formaldehyd, wenn auch in gebundener Form, vorliegt, der beispielsweise bei thermischer Belastung freigesetzt werden kann.

Ein der DE-A1 33 28 456 analoger Weg mit den eben erwähnten Nachteilen wird in der EP-B1 80 635 beschritten. Hier wird der Dispersion Harnstoff als Formaldehydfänger zugesetzt.

Der Erfindung lag daher die Aufgabe zugrunde, den Formaldehyd-Gehalt in wäßrigen Kunststoffdispersion auf der Basis von selbstvernetzenden Polymerisaten oder nicht-vernetzenden Polymerisaten drastisch zu reduzieren, ohne die Festigkeit damit gebundener Substrate negativ zu beeinflußen und unter Vermeidung einer erneuten Freisetzung von Formaldehyd bei der Verarbeitung.

Gegenstand der Erfindung ist ein Verfahren zur Herstellung von wäßrigen Kunststoffdispersionen mit vermindertem Formaldehyd-Gehalt, dadurch gekennzeichnet, daß zu wäßrigen Dispersionen auf der Basis von Polymerisaten eines oder mehrerer Monomeren aus der Gruppe der Acrylsäureester, Methacrylsäureester, Vinylester, Olefine, Vinylhalogenide, Vinylaromaten, ethylenisch ungesättigter Carbonsäuren und deren Amide, welche 0 bis 10 Gew%, bezogen auf das Gesamtgewicht des Polymerisats, N-Methylolacrylamid, N-Methylolmethacrylamid, N-(Isobutoxymethyl)-acrylamid oder N-(Isobutoxymethyl)-methacrylamid enthalten, oder für den Fall, daß keine der genannten N-Methylol- und (N-Isobutoxymethyl)funktionellen Monomereinheiten enthalten sind, in Gegenwart von Formaldehyd-freisetzenden Redoxkatalysatoren aus der Gruppe der Alkaliformaldehydsulfoxylate hergestellt worden sind, 0.05 bis 10.0 Gew%, bezogen auf das Polymerisat, eine oder mehrere Peroxy-Verbindungen aus der Gruppe Wasserstoffperoxid, organische Peroxide, Perborate, Percarbonate, Persulfate, Perphosphate nach Abschluß der Polymerisation zugegeben werden.

Bevorzugte (Meth)acrylsäureester sind die Ester von Alkoholen mit 1 bis 10 Kohlenstoffatomen, wie Methyl(meth)acrylat, Ethyl(meth)acrylat, Propyl(meth)acrylat, Butyl(meth)acrylat, 2-Ethylhexyl(meth)acrylat oder Lauryl(meth)acrylat.

Bevorzugt zu nennende Vinylester sind die Ester von Alkylcarbonsäuren mit 1 bis 15 C-Atomen, wie Vinylacetat, Vinylpropionat, Vinylbutyrat, Vinyl-2-ethylhexanoat, Vinyllaurat, Versaticsäure^{R}-Vinylester (beispielsweise VeoVa9^{R} oder VeoVa10^{R}, Vinylester von α-verzweigten Monocarbonsäuren mit 9 bzw. 10 C-Atomen, Handelsprodukte der Fa. Shell) oder 1-Methylvinylacetat (Isopropenylacetat).

Geeignete Olefine sind Ethylen, Propylen oder Butadien. Als Vinylhalogenide werden vorzugsweise Vinylchlorid oder Vinylidenchlorid eingesetzt. Bevorzugte Vinylaromaten sind Styrol oder Vinyltoluol.

Beispiele für ethylenisch ungesättigte Carbonsäuren und deren Amide sind Acrylsäure, Methacrylsäure, Itakonsäure, Fumarsäure, Maleinsäure, sowie deren Monoamide und Diamide. Insbesonders (Meth)acrylsäure und (Meth)acrylsäureamid.

Als Bindemittel besonders geeignet sind wäßrige Dispersionen von Vinylacetat-Homopolymerisaten, Vinylacetat-Ethylen-Copolymerisaten, Vinylacetat-Ethylen-N-Methylol(meth)acrylamid-Terpolymerisaten, Vinylchlorid-Vinylacetat-Ethylen-Terpolymerisaten, Vinylchlorid-Vinylacetat-Ethylen-N-Methylol(meth)acrylamid-Mischpolymerisaten, Vinylchlorid-Ethylen-Copolymerisaten, Vinylchlorid-Ethylen-N-Methylol(meth)acrylamid-Terpolymerisaten, Alkylacrylat-N-Methylol(meth)acrylamid-Copolymerisaten und Vinylacetat-Ethylen-Acrylat-Mischpolymerisaten oder Vinylacetat-Acrylat-Mischpolymerisaten, die gegebenenfalls einen N-Methylol(meth)acrylamid-Anteil aufweisen.

Geeignete Peroxy-Verbindungen sind Verbindungen aus der Gruppe Wasserstoffperoxid, organische Peroxide, Perborate, Percarbonate, Persulfate und Perphosphate. Vorzugsweise werden wasserlösliche Peroxy-Verbindungen eingesetzt. Beispiele für organische Peroxide sind Ketoperoxide, beispielsweise Acetylacetonperoxid, oder Hydroperoxide, wie Isopropylhydroperoxid, tert.-Butylhydroperoxid und Cumolhydroperoxid. Beispiele für Perborate sind Natriumperborat (NaBO₃·4H₂O) oder Perborax (Na₂B₄O₈·10H₂O). Beispiele für Persulfate sind Alkali- und Ammoniumperoxosulfate, sowie Alkali- und Ammoniumperoxodisulfate, beispielsweise Kaliumpersulfat. Ein geeignetes Percarbonat ist beispielsweise Natriumpercarbonat. Besonders bevorzugt wird Wasserstoffperoxid eingesetzt.

Die Peroxy-Verbindung wird der Kunststoffdispersion nach Abschluß der Polymerisation zugegeben. Vorzugsweise wird die Peroxy-Verbindung in wäßriger Lösung oder als wäßrige Emulsion zudosiert. Die Menge an Peroxy-Verbindung hängt davon ab, ob und in welcher Menge N-Alkylamide und/oder N-Alkoxyalkylamide ethylenisch ungesättigter Carbonsäuren im dispergierten Polymerisat vorhanden sind. Es genügt eine Menge von 0.05 bis 10.0 Gew%, bezogen auf das Polymerisat, an Peroxy-Verbindung. Vorzugsweise werden 0.5 bis 5.0 Gew%, insbesonders 0.5 bis 2.0 Gew%, eingesetzt. Gegebenenfalls kann die Dispersion nach der Zugabe der Peroxy-Verbindung durch Zugabe von Base, beispielsweise Ammoniak, auf einen neutralen pH-Wert eingestellt werden.

Die erfindungsgemäß modifizierten Kunststoffdispersionen eignen sich für den Einsatz als Bindemittel, Beschichtungsmittel, Imprägnierungsmittel und Klebemittel in allen Bereichen in denen ein niederer Formaldehydgehalt oder eine verminderte Formaldehydfreisetzung bei der Verarbeitung gefordert werden. Dies sind beispielsweise die Beschichtung und Verklebung von Papier, die Ausrüstung von Textilien und die Verbindung von Holzwerkstücken.

Besonders geeignet sind die erfindungsgemäßen Kunststoffdispersionen für die Bindung und Beschichtung von Vliesstoffen wie Krempelvliese, Airlaid-Papiere, Naßvliese und Spinnvliese. Durch die Zugabe der Peroxyverbindungen wird nicht nur der Gehalt an freiem Formaldehyd in der Dispersion vermindert, auch die damit gebundenen Vliesstoffe weisen nach Verarbeitung einen drastisch verminderten Gehalt an freiem Formaldehyd auf. Die mit den erfindungsgemäßen Dispersionen gebundenen Vliese zeigen eine hohe Naßfestigkeit und können wegen des geringen Gehalts an freiem Formaldehyd auch im Hygiene- und Medizinbereich mit hohen Anforderungen eingesetzt werden.

Die nachfolgenden Beispiele dienen zur weiteren Erläuterung der Erfindung.

### Beispiel 1:

Zu einer wäßrigen Dispersion mit einem Festgehalt von 47 Gew% eines Vinylacetat-Ethylen-N-Methylolacrylamid-Terpolymerisats mit einem Vinylacetat-Gehalt von 56 Gew%, einem Ethylengehalt von 41 Gew% und einem N-Methylolacrylamid-Gehalt von 3.0 Gew% wurden jeweils 0.0, 0.5, 1.0 oder 2.0 Gew% H₂O₂, bezogen auf das Terpolymerisat, zugegeben (Zugabe in 47 %-iger wäßriger Lösung).
Die so behandelten Dispersionen wurden dann 24 Stunden, 2 Wochen, 8 Wochen oder 20 Wochen gelagert. Nach der Lagerzeit wurde der Formaldehyd-Gehalt in der wäßrigen Phase der Dispersionen nach der Acetylaceton-Methode bestimmt. Die Dispersionen wurden als Binder für Vliesstoffe aus Viskosefaser eingesetzt. Der Formaldehyd-Gehalt der Vliese wurde nach der Acetylaceton-Methode bestimmt; die Festigkeit der Vliese (Trockenfestigkeit und Naßfestigkeit) nach DIN 53857 bestimmt.
Die Meßergebnisse von Beispiel 1 sind in Tabelle 1 aufgeführt.

### Beispiel 2:

Zu einer wäßrigen Dispersion mit einem Festgehalt von 47 Gew% eines Vinylacetat-Ethylen-N-Methylolacrylamid-Terpolymerisats mit einem Vinylacetat-Gehalt von 56 Gew%, einem Ethylengehalt von 41 Gew% und einem N-Methylolacrylamid-Gehalt von 3.0 Gew% wurden 0.0 bzw. 8.0 Gew% Kaliumpersulfat, bezogen auf das Terpolymerisat, in wäßriger Lösung zugegeben.
Die so behandelten Dispersionen wurden 10 Wochen gelagert und zur Herstellung von Vliesen verwendet. Der Formaldehyd-Gehalt im Vlies wurde nach der Acetylaceton-Methode bestimmt. Mit der unbehandelten Dispersion betrug der Formaldehyd-Gehalt im Vlies 43 ppm, mit der mit Kaliumpersulfat versetzten Dispersion betrug der Formaldehyd-Gehalt im Vlies nur mehr 12 ppm.

### Beispiel 3:

Zu einer wäßrigen Dispersion mit einem Festgehalt von 47 Gew% eines Vinylacetat-Ethylen-N-Methylolacrylamid-Terpolymerisats mit einem Vinylacetat-Gehalt von 56 Gew%, einem Ethylengehalt von 41 Gew% und einem N-Methylolacrylamid-Gehalt von 3.0 Gew% wurden 0.0 bzw. 2.6 Gew% tert-Butylhydroperoxid, bezogen auf das Terpolymerisat, in wäßriger Emulsion zugegeben.
Die so behandelten Dispersionen wurden 10 Wochen gelagert und zur Herstellung von Vliesen verwendet. Der FormaldehydGehalt im Vlies wurde nach der Acetylaceton-Methode bestimmt. Mit der unbehandelten Dispersion betrug der Formaldehyd-Gehalt im Vlies 43 ppm, mit der mit tert-Butylhydroperoxid versetzten Dispersion betrug der Formaldehyd-Gehalt im Vlies nur mehr 14 ppm.

### Beispiel 4:

Zu einer wäßrigen Dispersion mit einem Festgehalt von 50 Gew% eines Vinylacetat-Ethylen-N-Methylolacrylamid-Mischpolymerisats mit einem Vinylacetat-Gehalt von 66 Gew%, einem Ethylengehalt von 26 Gew% und einem N-Methylolacrylamid-Gehalt von 4.0 Gew% wurden 0.0 bzw. 4.2 Gew% Natriumperborat, bezogen auf das Mischpolymerisat, in wäßriger Emulsion zugegeben.
Die so behandelten Dispersionen wurden 10 Wochen gelagert und zur Herstellung von Vliesen verwendet. Der Formaldehyd-Gehalt im Vlies wurde nach der Acetylaceton-Methode bestimmt. Mit der unbehandelten Dispersion betrug der Formaldehyd-Gehalt im Vlies 54 ppm, mit der mit Natriumperborat versetzten Dispersion betrug der Formaldehyd-Gehalt im Vlies nur mehr 11 ppm.

### Beispiel 5:

Zu einer wäßrigen Dispersion mit einem Festgehalt von 45 Gew% eines Vinylacetat-Butylacrylat-N-Methylolacrylamid-Terpolymerisats mit einem Vinylacetat-Gehalt von 62 Gew%, einem Butylacrylatgehalt von 35 Gew% und einem N-Methylolacrylamid-Gehalt von 3.0 Gew% wurden 0.0 bzw. 1.0 Gew% Wasserstoffperoxid, bezogen auf das Terpolymerisat, in wäßriger Lösung zugegeben.
Die so behandelten Dispersionen wurden 10 Wochen gelagert und zur Herstellung von Vliesstoffen verwendet. Nach der Lagerzeit wurde der Formaldehyd-Gehalt in der wäßrigen Phase der Dispersionen und in den Vliesstoffen nach der Acetylaceton-Methode bestimmt. In der unbehandelten Dispersion betrug der Formaldehyd-Gehalt 310 ppm, in der mit Wasserstoffperoxid versetzten Dispersion betrug der Formaldehyd-Gehalt nur mehr 261 ppm. In dem mit der unbehandelten Dispersion hergestellten Vliesstoff betrug der Formaldehyd-Gehalt 50 ppm, in dem mit der behandelten Dispersion gebundenen Vliesstoff nur mehr 15 ppm.

### Beispiel 6:

Zu einer, in Gegenwart eines Brüggolit enthaltenden Redoxinitiatorsystems hergestellten, wäßrigen Dispersion mit einem Festgehalt von 55 Gew% eines Vinylacetat-Ethylen-Copolymerisats mit einem Vinylacetat-Gehalt von 82 Gew%, und einem Ethylengehalt von 18 Gew% wurden 0.0 bzw. 1.0 Gew% Wasserstoffperoxid, bezogen auf das Copolymerisat, in wäßriger Lösung zugegeben.
Die so behandelten Dispersionen wurden 10 Wochen gelagert und zur Herstellung von Vliesstoffen verwendet. Nach der Lagerzeit wurde der Formaldehyd-Gehalt in der wäßrigen Phase der Dispersionen und in den Vliesstoffen nach der Acetylaceton-Methode bestimmt. In der unbehandelten Dispersion betrug der Formaldehyd-Gehalt 340 ppm, in der mit Wasserstoffperoxid versetzten Dispersion betrug der Formaldehyd-Gehalt nur mehr 49 ppm. In dem mit der unbehandelten Dispersion hergestellten Vliesstoff betrug der Formaldehyd-Gehalt 50 ppm, in dem mit der behandelten Dispersion gebundenen Vliesstoff nur mehr 12 ppm.

Methoden zur Herstellung der Vliesstoffe, zur Bestimmung des Formaldehyd-Gehalts und zur Bestimmung der mechanischen Festigkeit der Vliesstoffe:

### Herstellung der Vliesstoffe:

Zur Herstellung der Vliesstoffe wurde ein Vlies aus Viskosefasern (3.1 dtex, 60 mm Länge) über Krempel, Kreuzleger und Nadelmaschine gefertigt. Mit Vollbadimprägnierung und Pflatschen wurden die Dispersionen jeweils in einer Menge von 30 Gew%, bezogen auf das Vliesgewicht, aufgetragen und bei 150°C drei Minuten lang in einem Siebtrommeltrockner getrocknet. Nach der Klimatisierung des etwa 60 g/cm³ schweren Vlieses bei 22°C und 55 % Luftfeuchtigkeit wurden der Formaldehyd-Gehalt nach der Acetylaceton-Methode und die Festigkeit des Vlieses (Trockenfestigkeit und Naßfestigkeit) nach DIN 53857 bestimmt.

Bestimmung des Formaldehyd-Gehalts nach der Acetylaceton-Methode:

### In der wäßrigen Phase der Dispersion:

Die Dispersion wurde mit destilliertem Wasser 1 : 1 verdünnt und die Polymerpartikel in der Ultrazentrifuge abzentrifugiert. Der klare Überstand wurde abgehoben, verdünnt und zur Formaldehyd-Bestimmung nach der Acetylaceton-Methode eingesetzt.

### Im Vlies:

2.5 g des Vlieses wurden zerkleinert und in einem Meßkolben mit 100 ml destilliertem Wasser 60 Minuten lang bei 40°C geschwenkt und anschließend filtriert. Das Filtrat wurde zur Formaldehyd-Bestimmung nach der Acetylaceton-Methode eingesetzt.

### Acetylaceton-Methode:

Das Acetylaceton-Reagenz bestand aus einer Mischung von 150 g Ammoniumacetat, 3 ml Eisessig und 2 ml Acetylaceton, welche mit destilliertem Wasser auf 1000 ml verdünnt wurde. 1 ml des verdünnten Überstands aus der Aufbereitung der Dispersion bzw. 5 ml des Filtrats aus der Aufbereitung des Vlieses wurden mit 5 ml Acetylaceton-Reagenz versetzt, 30 Minuten bei 50°C bzw. 40°C im Wasserbad geschüttelt, 30 Minuten bei Raumtemperatur stehengelassen und die Formaldehyd-Konzentration UV-spektrophotometrisch ermittelt.

Bestimmung der Trocken- und Naßfestigkeit von Vliesen nach DIN 53857 (Höchstzugkraft und Dehnung):
Die Vliese wurden vor der Messung im Normalklima ausgelegt (Lufttemperatur 22°C, relative Luftfeuchte 55 %). Zur Bestimmung der Naßfestigkeit wurden die Vliese noch eine Minute in destilliertem Wasser gelagert. Aus den klimatisierten Vliesen wurden pro Messung je 10 Probestreifen (100 mm Länge, 15 mm Breite) fünf davon quer und fünf davon längs zur Fertigungsrichtung entnommen. An einer Zugprüfmaschine wurden die Höchstzugkraft (HZK) und die Dehnung beim Vliesriß bestimmt und jeweils der Mittelwert aus den zehn Einzelprüfungen errechnet.

**TABELLE 1**

| Dispersion | | Vlies (trocken) | | | Vlies (naß) | | Formaldehyd-Gehalt | |
|---|---|---|---|---|---|---|---|---|
| H₂O₂-Gehalt [%] | Lagerzeit | HZK [N] | Dehnung [%] | Gewicht [g/m²] | HZK [N] | Dehnung [%] | Dispersion [ppm] | Vlies [ppm] |
| 0.0 | 24 h | 13.35 | 16.00 | 52.5 | 8.14 | 20.90 | 764 | 37 |
| 0.5 | 24 h | 14.39 | 21.60 | 58.2 | 9.49 | 24.15 | 643 | 21 |
| 1.0 | 24 h | 13.06 | 16.95 | 54.0 | 10.25 | 11.00 | 619 | 17 |
| 2.0 | 24 h | 13.66 | 19.00 | 55.0 | 8.55 | 21.75 | 533 | 15 |
| 0.0 | 2 w | 13.15 | 14.55 | 56.3 | 8.89 | 22.15 | 795 | 40 |
| 0.5 | 2 w | 12.24 | 15.10 | 51.5 | 7.31 | 21.20 | 524 | 13 |
| 1.0 | 2 w | 12.17 | 15.00 | 52.8 | 6.77 | 20.00 | 523 | 13 |
| 2.0 | 2 w | 12.68 | 15.40 | 52.0 | 7.44 | 20.65 | 483 | 13 |
| 0.0 | 8 w | 14.20 | 16.65 | 53.90 | 8.80 | 20.70 | 799 | 45 |
| 0.5 | 8 w | 12.09 | 19.70 | | | | 285 | 9 |
| 1.0 | 8 w | 12.01 | 17.35 | 53.30 | 7.77 | 21.60 | 367 | 12 |
| 2.0 | 8 w | 10.60 | 19.10 | | | | 357 | 9 |
| 0.0 | 20 w | 13.26 | 19.70 | 55.10 | 7.46 | 21.30 | 856 | 43 |
| 0.5 | 20 w | 11.14 | 21.15 | 54.30 | 6.90 | 22.15 | 221 | 16 |
| 1:0 | 20 w | 11:61 | 19.80 | 50.90 | 7:23 | 21.80 | 196 | 7 |
| 2.0 | 20 w | 9.02 | 20.35 | 52.20 | 7.09 | 21.30 | 247 | 9 |

## Patentansprüche (Patentansprüche für folgende(n) Vertragsstaat(en): BE, CH, DE, FR, GB, IT, LI, NL, SE)

1. Verfahren zur Herstellung von wäßrigen Kunststoffdispersionen mit vermindertem Formaldehyd-Gehalt, dadurch gekennzeichnet, daß zu wäßrigen Dispersionen auf der Basis von Polymerisaten eines oder mehrerer Monomeren aus der Gruppe der Acrylsäureester, Methacrylsäureester, Vinylester, Olefine, Vinylhalogenide, Vinylaromaten, ethylenisch ungesättigter Carbonsäuren und deren Amide, welche 0 bis 10 Gew%, bezogen auf das Gesamtgewicht des Polymerisats, N-Methylolacrylamid, N-Methylolmethacrylamid, N-(Isobutoxymethyl)-acrylamid oder N-(Isobutoxymethyl)-methacrylamid enthalten, oder für den Fall, daß keine der genannten N-Methylol- und (N-Isobutoxymethyl)-funktionellen Monomereinheiten enthalten sind, in Gegenwart von Formaldehydfreisetzenden Redoxkatalysatoren aus der Gruppe der Alkaliformaldehydsulfoxylate hergestellt worden sind, 0.05 bis 10.0 Gew%, bezogen auf das Polymerisat, eine oder mehrere Peroxy-Verbindungen aus der Gruppe Wasserstoffperoxid, organische Peroxide, Perborate, Percarbonate, Persulfate, Perphosphate nach Abschluß der Polymerisation zugegeben werden.

2. Verfahren nach Anspruch 1, dadurch gekennzeichnet, daß wäßrige Dispersionen von Vinylacetat-Homopolymerisaten, Vinylacetat-Ethylen-Copolymerisaten, Vinylacetat-Ethylen-N-Methyol(meth)acrylamid-Terpolymerisaten, Vinylchlorid-Vinylacetat-Ethylen-Terpolymerisaten Vinylchlorid-Vinylacetat-Ethylen-N-Methylol(meth)acrylamid-Mischpolymerisaten, Vinylchlorid-Ethylen-Copolymerisaten, Vinylchlorid-Ethylen-N-Methylol(meth)acrylamid-Terpolymerisaten, Alkylacrylat-N-Methylol(meth)acrylamid-Copolymerisaten, Vinylacetat-EthylenAcrylat-Mischpolymerisaten oder Vinylacetat-Acrylat-Mischpolymerisaten, die gegebenenfalls einen N-Methylolacrylamid-Anteil oder N-Methylolmethacrylamid-Anteil aufweisen, eingesetzt werden.

3. Verfahren nach Anspruch 1 oder 2, dadurch gekennzeichnet, daß wasserlösliche Peroxy-Verbindungen eingesetzt werden.

4. Verfahren nach Anspruch 1, 2 oder 3, dadurch gekennzeichnet, daß als Peroxy-Verbindung Wasserstoffperoxid zugegeben wird.

5. Verfahren nach Anspruch 1, 2, 3 oder 4, dadurch gekennzeichnet, daß zur Dispersion 0.5 bis 5.0 Gew%, bezogen auf das Polymerisat, Peroxy-Verbindung zugegeben werden.

6. Verfahren zur Herstellung nach Anspruch 5, dadurch gekennzeichnet, daß die Peroxy-Verbindung in wäßriger Lösung oder Emulsion zugegeben wird.

7. Verwendung von Kunststoffdispersionen erhältlich nach einem der obigen Ansprüche als Bindemittel, Beschichtungsmittel, Imprägnierungsmittel und Klebemittel.

8. Verwendung von Kunststoffdispersionen erhältlich nach einem der obigen Ansprüche für die Bindung und Beschichtung von Vliesstoffen.

## Patentansprüche (Patentansprüche für folgende(n) Vertragsstaat(en): ES)

1. Verfahren zur Herstellung von wäßrigen Kunststoffdispersionen mit vermindertem Formaldehyd-Gehalt, dadurch gekennzeichnet, daß zu wäßrigen Dispersionen auf der Basis von Polymerisaten eines oder mehrerer Monomeren aus der Gruppe der Acrylsäureester, Methacrylsäureester, Vinylester, Olefine, Vinylhalogenide, Vinylaromaten, ethylenisch ungesättigter Carbonsäuren und deren Amide, welche 0 bis 10 Gew%, bezogen auf das Gesamtgewicht des Polymerisats, N-Methylolacrylamid, N-Methylolmethacrylamid, N-(Isobutoxymethyl)-acrylamid oder N-(Isobutoxymethyl)-methacrylamid enthalten, oder für den Fall, daß keine der genannten N-Methylol- und (N-Isobutoxymethyl)-funktionellen Monomereinheiten enthalten sind, in Gegenwart von Formaldehyd-freisetzenden Redoxkatalysatoren hergestellt worden sind, 0.05 bis 10.0 Gew%, bezogen auf das Polymerisat, eine oder mehrere Peroxy-Verbindungen aus der Gruppe Wasserstoffperoxid, organische Peroxide, Perborate, Percarbonate, Persulfate, Perphosphate nach Abschluß der Polymerisation zugegeben werden.

2. Verfahren nach Anspruch 1, dadurch gekennzeichnet, daß wäßrige Dispersionen von Vinylacetat-Homopolymerisaten, Vinylacetat-Ethylen-Copolymerisaten, Vinylacetat-Ethylen-N-Methyol(meth)acrylamid-Terpolymerisaten, Vinylchlorid-Vinylacetat-Ethylen-Terpolymerisaten, Vinylchlorid-Vinylacetat-Ethylen-N-Methylol(meth)acrylamid-Mischpolymerisaten, Vinylchlorid-Ethylen-Copolymerisaten, Vinylchlorid-Ethylen-N-Methylol(meth)acrylamid-Terpolymerisaten, Alkylacrylat-N-Methylol(meth)acrylamid-Copolymerisaten, Vinylacetat-Ethylen-Acrylat-Mischpolymerisaten oder Vinylacetat-Acrylat-Mischpolymerisaten, die gegebenenfalls einen N-Methylolacrylamid-Anteil oder N-Methylolmethacrylamid-Anteil aufweisen, eingesetzt werden.

3. Verfahren nach Anspruch 1 oder 2, dadurch gekennzeichnet, daß wasserlösliche Peroxy-Verbindungen eingesetzt werden.

4. Verfahren nach Anspruch 1, 2 oder 3, dadurch gekennzeichnet, daß als Peroxy-Verbindung Wasserstoffperoxid zugegeben wird.

5. Verfahren nach Anspruch 1, 2, 3 oder 4, dadurch gekennzeichnet, daß zur Dispersion 0.5 bis 5.0 Gew%, bezogen auf das Polymerisat, Peroxy-Verbindung zugegeben werden.

6. Verfahren zur Herstellung nach Anspruch 5, dadurch gekennzeichnet, daß die Peroxy-Verbindung in wäßriger Lösung oder Emulsion zugegeben wird.

7. Verwendung von Kunststoffdispersionen erhältlich nach einem der obigen Ansprüche als Bindemittel, Beschichtungsmittel, Imprägnierungsmittel und Klebemittel.

8. Verwendung von Kunststoffdispersionen erhältlich nach einem der obigen Ansprüche für die Bindung und Beschichtung von Vliesstoffen.

## Claims (Claims for the following Contracting State(s): BE, CH, DE, FR, GB, IT, LI, NL, SE)

1. Process for the preparation of aqueous dispersions of plastics having a reduced formaldehyde content, characterized in that 0.05 to 10.0% by weight, based on the polymer, of one or more peroxy compounds from the group comprising hydrogen peroxide, organic peroxides, perborates, percarbonates, persulphates and perphosphates are added to aqueous dispersions based on polymers of one or more monomers from the group comprising acrylic acid esters, methacrylic acid esters, vinyl esters, olefins, vinyl halides, vinylaromatics and ethylenically unsaturated carboxylic acids and amides thereof, which contain 0 to 10% by weight, based on the total weight of the polymer, of N-methylolacrylamide, N-methylolmethacrylamide, N-(isobutoxymethyl)acrylamide or N-(isobutoxymethyl)methacrylamide, or, in the case that none of the abovementioned N-methylol- and (N-isobutoxymethyl)-functional monomer units is present, have been prepared in the presence of formaldehyde-releasing redox catalysts from the group of the alkali metal formaldehyde-sulphoxylates, after the polymerization has ended.

2. Process according to Claim 1, characterized in that aqueous dispersions of vinyl acetate homopolymers, vinyl acetate-ethylene copolymers, vinyl acetate-ethylene-N-methylol(meth)acrylamide terpolymers, vinyl chloride-vinyl acetate-ethylene terpolymers, vinyl chloride-vinyl acetate-ethylene-N-methylol(meth)acrylamide copolymers, vinyl chloride-ethylene copolymers, vinyl chloride-ethylene-N-methylol(meth)acrylamide terpolymers, alkyl acrylate-N-methylol(meth)acrylamide copolymers, vinyl acetate-ethylene-acrylate copolymers or vinyl acetate-acrylate copolymers, which optionally have an N-methylolacrylamide content or N-methylolmethacrylamide content, are employed.

3. Process according to Claim 1 or 2, characterized in that water-soluble peroxy compounds are employed.

4. Process according to Claim 1, 2 or 3, characterized in that hydrogen peroxide is added as the peroxy compound.

5. Process according to Claim 1, 2, 3 or 4, characterized in that 0.5 to 5.0% by weight, based on the polymer, of peroxy compound are added to the dispersion.

6. Process for the preparation according to Claim 5, characterized in that the peroxy compound is added in aqueous solution or emulsion.

7. Use of dispersions of plastics obtainable according to one of the above claims as binders, coating agents, impregnating agents and adhesives.

8. Use of dispersions of plastics obtainable according to one of the above claims for bonding and coating non-wovens.

## Claims (Claims for the following Contracting State(s): ES)

1. Process for the preparation of aqueous dispersions of plastics having a reduced formaldehyde content, characterized in that 0.05 to 10.0% by weight, based on the polymer, of one or more peroxy compounds from the group comprising hydrogen peroxide, organic peroxides, perborates, percarbonates, persulphates and perphosphates are added to aqueous dispersions based on polymers of one or more monomers from the group comprising acrylic acid esters, methacrylic acid esters, vinyl esters, olefins, vinyl halides, vinylaromatics and ethylenically unsaturated carboxylic acids and amides thereof, which contain 0 to 10% by weight, based on the total weight of the polymer, of N-methylolacrylamide, N-methylolmethacrylamide, N-(isobutoxy-methyl)acrylamide or N-(isobutoxymethyl)methacrylamide, or, in the case that none of the abovementioned N-methylol- and (N-isobutoxymethyl)-functional monomer units is present, have been prepared in the presence of formaldehyde-releasing redox catalysts, after the polymerization has ended.

2. Process according to Claim 1, characterized in that aqueous dispersions of vinyl acetate homopolymers, vinyl acetate-ethylene copolymers, vinyl acetate-ethylene-N-methylol(meth)acrylamide terpolymers, vinyl chloride-vinyl acetate-ethylene terpolymers, vinyl chloride-vinyl acetate-ethylene-N-methylol(meth)acrylamide copolymers, vinyl chloride-ethylene copolymers, vinyl chloride-ethylene-N-methylol(meth)acrylamide terpolymers, alkyl acrylate-N-methylol(meth)acrylamide copolymers, vinyl acetate-ethylene-acrylate copolymers or vinyl acetate-acrylate copolymers, which optionally have an N-methylolacrylamide content or N-methylolmethacryl-amide content, are employed.

3. Process according to Claim 1 or 2, characterized in that water-soluble peroxy compounds are employed.

4. Process according to Claim 1, 2 or 3, characterized in that hydrogen peroxide is added as the peroxy compound.

5. Process according to Claim 1, 2, 3 or 4, characterized in that 0.5 to 5.0% by weight, based on the polymer, of peroxy compound are added to the dispersion.

6. Process for the preparation according to Claim 5, characterized in that the peroxy compound is added in aqueous solution or emulsion.

7. Use of dispersions of plastics obtainable according to one of the above claims as binders, coating agents, impregnating agents and adhesives.

8. Use of dispersions of plastics obtainable according to one of the above claims for bonding and coating nonwovens.

## Revendications (Revendications pour l'(les) Etat(s) contractant(s) suivant(s): BE, CH, DE, FR, GB, IT, LI, NL, SE)

1. Procédé de préparation de dispersions polymères aqueuses ayant une teneur réduite en formaldéhyde, caractérisé en ce que l'on ajoute, après la fin de la polymérisation, à des dispersions aqueuses à base de polymères d'un ou de plusieurs monomères parmi le groupe constitué d'esters acryliques, d'esters méthacryliques, d'esters vinyliques, d'oléfines, d'halogénures de vinyle, de composés vinylaromatiques, d'acides carboxyliques éthyléniquement insaturés et de leurs amides, qui renferment de 0 à 10% en poids, par rapport au poids total du polymère, de N-méthylolacrylamide, de N-méthylolméthacrylamide, de N-(isobutoxyméthyl)-acrylamide ou de N-(isobutoxyméthyl)méthacrylamide, ou dans le cas où aucun des motifs monomères à fonction N-méthylol et (N-isobutoxyméthyle) mentionnés n'est présent, ont été préparés en présence de catalyseurs Redox libérant du formaldéhyde parmi le groupe constitué de formaldéhydesulfoxylates de métaux alcalins, de 0,05 à 10,0% en poids, par rapport au polymère, d'un ou de plusieurs composés peroxy parmi le groupe constitué du peroxyde d'hydrogène, de peroxydes organiques, de perborates, de percarbonates, de persulfates et de perphosphates.

2. Procédé selon la revendication 1, caractérisé en ce que l'on utilise des dispersions aqueuses d'homopolymères d'acétate de vinyle, de copolymères acétate de vinyle/éthylène, de terpolymères acétate de vinyle/éthylène/N-méthylol(méth)acrylamide, de terpolymères chlorure de vinyle/acétate de vinyle/éthylène, de copolymères chlorure de vinyle/acétate de vinyle/éthylène/N-méthylol(méth)acrylamide, de copolymères chlorure de vinyle/éthylène, de terpolymères chlorure de vinyle/éthylène/N-méthylol(méth)acrylamide, de copolymères acrylate d'alkyle/N-méthylol(méth)acrylamide, de copolymères acétate de vinyle/éthylène/acrylate ou de copolymères acétate de vinyle/acrylate, qui renferment éventuellement une proportion de N-méthylolacrylamide ou une proportion de N-méthylolméthacrylamide.

3. Procédé selon la revendication 1 ou 2, caractérisé en ce que l'on utilise des composés peroxy hydrosolubles.

4. Procédé selon la revendication 1, 2 ou 3, caractérisé en ce que l'on ajoute du peroxyde d'hydrogène en tant que composé peroxy.

5. Procédé selon la revendication 1, 2, 3 ou 4, caractérisé en ce que l'on ajoute, en vue de la dispersion, de 0,5 à 5,0% en poids, par rapport au polymère, du composé peroxy.

6. Procédé de préparation selon la revendication 5, caractérisé en ce que le composé peroxy est ajouté en solution ou émulsion aqueuse.

7. Utilisation de dispersions polymères pouvant être obtenues selon l'une quelconque des revendications ci-dessus, en tant que liant, agent de revêtement, agent d'imprégnation et adhésif.

8. Utilisation de dispersions polymères pouvant être obtenues selon l'une quelconque des revendications ci-dessus, pour lier et revêtir des étoffes non tissées.

## Revendications (Revendications pour l'(les) Etat(s) contractant(s) suivant(s): ES)

1. Procédé de préparation de dispersions polymères aqueuses ayant une teneur réduite en formaldéhyde, caractérisé en ce que l'on ajoute, après la fin de la polymérisation, à des dispersions aqueuses à base de polymères d'un ou de plusieurs monomères parmi le groupe constitué d'esters acryliques, d'esters méthacryliques, d'esters vinyliques, d'oléfines, d'halogénures de vinyle, de composés vinylaromatiques, d'acides carboxyliques éthyléniquement insaturés et de leurs amides, qui renferment de 0 à 10% en poids, par rapport au poids total du polymère, de N-méthylolacrylamide, de N-méthylolméthacrylamide, de N-(isobutoxyméthyl)acrylamide ou de N-(isobutoxyméthyl)méthacrylamide, ou dans le cas où aucun des motifs monomères à fonction N-méthylol et (N-isobutoxyméthyle) mentionnés n'est présent, ont été préparés en présence de catalyseurs Redox libérant du formaldéhyde parmi le groupe constitué de formaldéhydesulfoxylates de métaux alcalins, de 0,05 à 10,0% en poids, par rapport au polymère, d'un ou de plusieurs composés peroxy parmi le groupe constitué du peroxyde d'hydrogène, de peroxydes organiques, de perborates, de percarbonates, de persulfates et de perphosphates.

2. Procédé selon la revendication 1, caractérisé en ce que l'on utilise des dispersions aqueuses d'homopolymères d'acétate de vinyle, de copolymères acétate de vinyle/éthylène, de terpolymères acétate de vinyle/éthylène/N-méthylol(méth)acrylamide, de terpolymères chlorure de vinyle/acétate de vinyle/éthylène, de copolymères chlorure de vinyle/acétate de vinyle/éthylène/N-méthylol(méth)acrylamide, de copolymères chlorure de vinyle/éthylène, de terpolymères chlorure de vinyle/éthylène/N-méthylol(méth)acrylamide, de copolymères acrylate d'alkyle/N-méthylol(méth)acrylamide, de copolymères acétate de vinyle/éthylène/acrylate ou de copolymères acétate de vinyle/acrylate, qui renferment éventuellement une proportion de N-méthylolacrylamide ou une proportion de N-méthylolméthacrylamide.

3. Procédé selon la revendication 1 ou 2, caractérisé en ce que l'on utilise des composés peroxy hydrosolubles.

4. Procédé selon la revendication 1, 2 ou 3, caractérisé en ce que l'on ajoute du peroxyde d'hydrogène en tant que composé peroxy.

5. Procédé selon la revendication 1, 2, 3 ou 4, caractérisé en ce que l'on ajoute, en vue de la dispersion, de 0,5 à 5,0% en poids, par rapport au polymère, du composé peroxy.

6. Procédé de préparation selon la revendication 5, caractérisé en ce que le composé peroxy est ajouté en solution ou émulsion aqueuse.

7. Utilisation de dispersions polymères pouvant être obtenues selon l'une quelconque des revendications ci-dessus, en tant que liant, agent de revêtement, agent d'imprégnation et adhésif.

8. Utilisation de dispersions polymères pouvant être obtenues selon l'une quelconque des revendications ci-dessus, pour lier et revêtir des étoffes non tissées.
